# EUROPÄISCHE PATENTSCHRIFT

(11) **EP 0 432 459 B1**
(45) Veröffentlichungstag und Bekanntmachung des Hinweises auf die Patenterteilung: **12.10.1994**
(21) Anmeldenummer: 90121445.2
(22) Anmeldetag: 09.11.1990
(51) Int. Cl.: H02H 9/00, H02H 1/06, H05B 39/02

(54) **Einschaltstrombegrenzer**
Switch-on current limiter
Limiteur de courant d'appel

(30) Priorität: 15.11.1989 DE 3937978
(43) Veröffentlichungstag der Anmeldung: 19.06.1991
(73) Patentinhaber: Asea Brown Boveri Aktiengesellschaft, 68309 Mannheim (DE)
(72) Erfinder: Viol, Gustav, W-5885 Schalksmühle (DE); Wenzel, Uwe, W-5880 Lüdenscheid (DE)
(74) Vertreter: Rupprecht, Klaus, Dipl.-Ing.

(56) Entgegenhaltungen:
- DE-A- 2 222 116
- FR-A- 2 546 356

## Beschreibung

Die Erfindung bezieht sich auf einen Einschaltstrombegrenzer für Lasten mit erhöhtem Einschaltstrom, mit einer den überhöhten Einschaltstrom reduzierenden, in Reihe zur Last schaltbaren, strombegrenzenden Widerstandsstufe und mit einer die Widerstandsstufe galvanisch leitend überbrückenden Schaltstufe.

Beim Einschalten einzelner oder mehrerer, zur Speisung von Niedervolt-Halogenlampen dienender Transformatoren größerer Leistung (300 VA und mehr), insbesondere Ringkerntransformatoren über Schalter oder Dimmer, treten sehr hohe Einschaltstromspitzen auf, die die vorgeschalteten Sicherungselemente (Schmelzsicherungen oder Leitungsschutzschalter) zum Ansprechen bringen können. Das gleiche trifft auch bei Glühlampen, insbesondere bei großen Lampenleistungen, zu. Um ein Ansprechen der vorgeschalteten Sicherungselemente beim Einschalten dieser Lasten zu verhindern, müssen Einschaltstrombegrenzer zur Begrenzung des Einschaltspitzenstromes eingesetzt werden.

Allgemein bekannte Einschaltstrombegrenzer sind so aufgebaut, daß nach dem Einschalten ein strombegrenzender Widerstand in Reihe zur Last nach einer fest vorgegebenen Zeitverzögerung durch ein Relais überbrückt wird. Diese Einschaltstrombegrenzer benötigen zur Funktion und Eigenversorgung eine geschaltete Netzspannung und haben keine Einstellmöglichkeiten. Sie sind deshalb bei Dimmerschaltungen mit in weiten Bereichen variabler Lastspannung, die keine geschaltete Netzphase haben, nicht einsetzbar.

Der Erfindung liegt die Aufgabe zugrunde, einen Einschaltstrombegrenzer anzugeben, der universell über Dimmer mit geschalteter Netzphase, über Dimmer ohne geschaltete Netzphase und über Schalter betreibbar ist.

Diese Aufgabe wird gelöst durch einen Einschaltstrombegrenzer für Lasten mit überhöhtem Einschaltstrom mit
- einer den überhöhten Einschaltstrom reduzierenden, in Reihe zur Last schaltbaren, strombegrenzenden Widerstandsstufe, und
- mit einer die Widerstandsstufe nach Ablauf einer vorgebbaren oder festen Verzögerungszeit nach dem Einschalten galvanisch leitend überbrückenden Schaltstufe, gekennzeichnet durch
- ein Netzteil, das eingangsseitig die Netzspannung empfängt, bei geschalteter Netzphase eine erste, feste Verzögerungszeit bildet, nach deren Ablauf das Netzteil ausgangsseitig die Schaltstufe ansteuert,
- und eine Signalaufbereitungsstufe, die die Lastspannung eingangsseitig empfängt, bei nicht geschalteter Netzphase eine zweite, vorgebbare Verzögerungszeit bildet, nach deren Ablauf die Signalaufbereitungsstufe das Netzteil über einen Schaltverstärker ansteuert, woraufhin das Netzteil nach Ablauf der ersten, festen Verzögerungszeit ausgangsseitig die Schaltstufe ansteuert.

Die mit der Erfindung erzielbaren Vorteile liegen insbesondere darin, daß die Zeitverzogerung, nach der die strombegrenzende Widerstandsstufe zu überbrücken ist, weitgehend unabhängig vom fließenden Laststrom oder von der anliegenden Lastspannung nahezu konstant eingestellt werden kann. Die Last kann auch in Minimalstellung eines Dimmers eingeschaltet werden, ohne daß dabei zusätzlich eine geschaltete Netzphase notwendig ist. Bei Anwendungsfällen, bei denen eine geschaltete Netzphase zur Verfügung steht, kann der Einschaltstrombegrenzer durch entsprechende einfache, externe Verdrahtung die Funktion allgemein bekannter Einschaltstrombegrenzer übernehmen. Bei allen möglichen Einsatzfällen wird der Einschaltstrombegrenzer nach dem Abschalten des Dimmers oder Schalters oder auch nach einem Netzausfall automatisch zurückgesetzt und startet beim Wiedereinschalten oder auch bei Netzwiederkehr von neuem unter Einschaltung der strombegrenzenden Vorwiderstände.

Der Einschaltstrombegrenzer ist vorteilhaft so aufgebaut daß er entweder als Reiheneinbaugerät für Zählerschränke, Verteilerschränke usw. in der Niederspannungs-Installationstechnik oder als Unterputzgerät eingesetzt werden kann.

Die Erfindung wird nachstehend anhand der in der Zeichnung dargestellten Ausführungsbeispiele erläutert.

Es zeigen:
- Fig. 1: ein Prinzipschaltbild eines Einschaltstrombegrenzers,
- Fig. 2: eine detaillierte Schaltungsanordnung eines Einschaltstrombegrenzers,
- Fig. 3 und 4: verschiedene Einsatzmöglichkeiten des Einschaltstrombegrenzers.

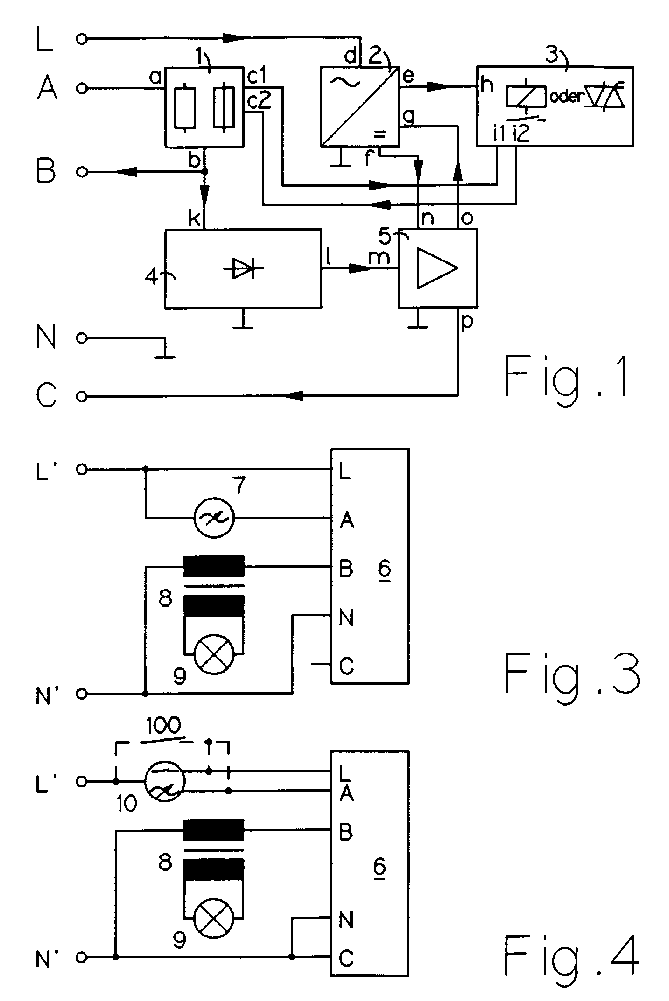

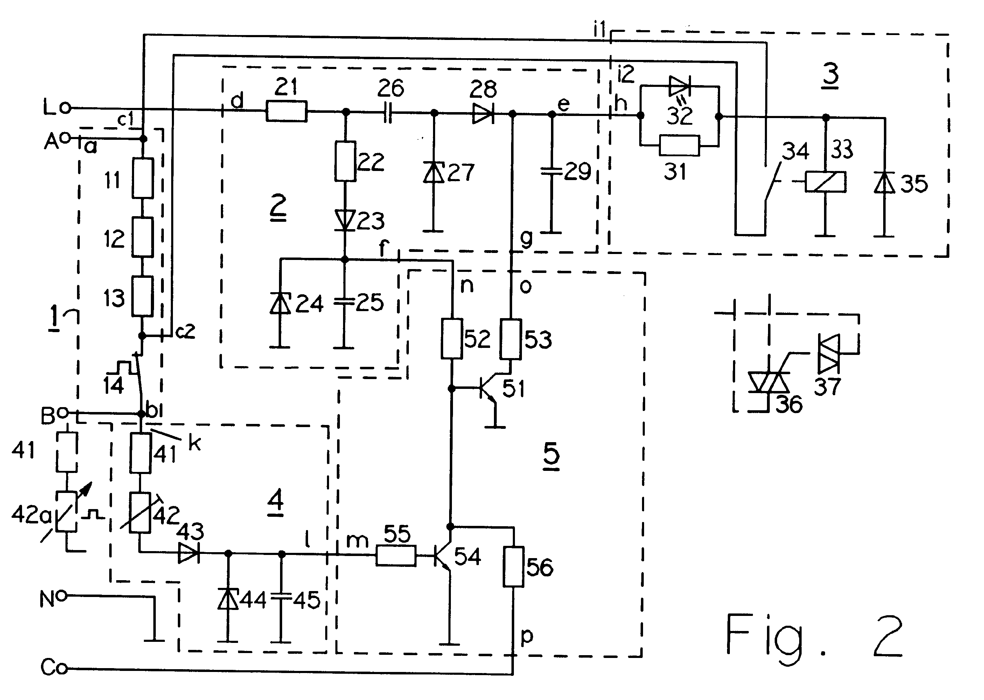

In Fig. 1 ist ein Prinzipschaltbild eines Einschaltstrombegrenzers dargestellt. Der Einschaltstrombegrenzer weist fünf Anschlüsse auf, und zwar einen Netzspannungsanschluß L, einen Lastspannungsanschluß A, einen Nulleiteranschluß N, einen Lastanschluß B, sowie einen Anschluß C. Der Lastspannungsanschluß A ist an einem Eingang a einer Widerstandsstufe 1 angeschlossen, während der Lastanschluß B mit einem Ausgang b dieser Widerstandsstufe 1 verbunden ist. Ein Ausgang c1 bzw. ein Eingang c2 der Widerstandsstufe 1 führen zu einem Eingang i1 bzw. zu einem Ausgang i2 einer Schaltstufe 3. Der Netzspannungsanschluß L ist an den Eingang d eines Netzteils 2 angeschlossen. Das Netzteil 2 weist einen zum Eingang h der Schaltstufe 3 führenden Ausgang e sowie einen weiteren Ausgang f und einen Eingang g auf. Eine Signalaufbereitungsstufe 4 ist über ihren Eingang k mit dem Lastanschluß B sowie mit dem Ausgang b der Widerstandsstufe 1 verbunden.

Ein Ausgang 1 der Signalaufbereitungsstufe 4 führt zu einem Eingang m eines Schaltverstärkers 5. Ein Eingang n bzw. ein Ausgang o des Schaltverstärkers 5 führen zu dem Ausgang f bzw. dem Eingang g des Netzteils 2. Ein Ausgang p des Schaltverstärkers 5 ist mit dem Anschluß C verbunden. An den Nulleiteranschluß L sind die Masseanschlüsse des Netzteils 2, der Schaltstufe 3, der Signalaufbereitungsstufe 4 und des Schaltverstärkers 5 angeschlossen.

In Fig. 2 ist eine detaillierte Schaltungsanordnung eines Einschaltstrombegrenzers dargestellt. Es sind die Anschlüsse L, N, A, B, C sowie die einzelnen Baueinheiten 1, 2, 3, 4, 5 des Einschaltstrombegrenzers zu erkennen. Die zwischen dem Lastspannungsanschluß A und dem Lastanschluß B angeordnete Widerstandsstufe 1 weist mehrere in Reihe geschaltete strombegrenzende Vorwiderstände 11, 12, 13 oder einen Hochlastwiderstand sowie eine hierzu in Reihe liegende Temperatursicherung 14 (bzw. Temperaturschalter) auf. Im einzelnen ist der Vorwiderstand 11 mit dem Eingang a und dem Ausgang c1 verbunden, während die Temperatursicherung 14 am Ausgang b liegt und der Eingang c2 am Verbindungspunkt des Vorwiderstandes 13 mit der Temperatursicherung 14 angreift.

Die Temperatursicherung oder Temperaturschalter 14 unterbricht den Laststrom, falls durch eine Störung eine unzulässig hohe Erwärmung im Einschaltstrombegrenzer auftritt.

An den Eingang d des Netzteils 2 ist ein Vorwiderstand 21 angeschlossen. Dieser Vorwiderstand 21 ist andererseits mit einem Widerstand 22 sowie einem Kondensator 26 verbunden. Der Widerstand 22 ist andererseits über die Anoden-Kathoden-Strecke einer Diode 23 mit der Kathode einer Zenerdiode 24 und einem Kondensator 25 beschaltet. Sowohl Zenerdiode 24 als auch Kondensator 25 liegen andererseits an Masse. Der Ausgang f des Netzteils 2 liegt am Verbindungspunkt Diode 23/Zenerdiode 24/Kondensator 25. Der vorstehend erwähnte Kondensator 26 ist andererseits mit einer mit ihrer Anode gegen Masse geschalteten Zenerdiode 27 und der Anode einer Diode 28 verbunden. Der weitere Anschluß der Diode 28 bildet den Ausgang e sowie den Eingang g und liegt über einem Kondensator 29 an Masse.

An den Eingang h der Schaltstufe 3 sind ein Widerstand 31 und die Anode einer Leuchtdiode 32 angeschlossen. Widerstand 31 und Leuchtdiode 32 sind andererseits mit einer gegen Masse geschalteten Relaisspule 33 und der Kathode einer gegen Masse geschalteten Diode 35 verbunden. Die Relaisspule 33 betätigt Relaiskontakte 34. Durch Schließen der Relaiskontakte 34 bei erregter Relaisspule 33 werden Eingang i1 und Ausgang i2 miteinander verbunden.

Alternativ zur aus Relaisspule 33/Relaiskontakte 34/Diode 35 bestehenden Anordnung kann an den Verbindungspunkt des Widerstandes 31 mit der Kathode der Leuchtdiode 32 auch der Steueranschluß eines TRIAC 36 über einen DIAC 37 angeschlossen sein. Die Hauptstromanschlüsse des Triac 36 sind dann mit dem Eingang i1 und dem Ausgang i2 verbunden. Diese Alternative ist gestrichelt in Fig. 2 dargestellt.

Der Eingang k der Signalaufbereitungsstufe 4 ist über einen Vorwiderstand 41 und einen einstellbaren Widerstand 42 oder einen temperaturabhängigen Widerstand (PTC) 42a mit der Anode einer Diode 43 verbunden. Die Diode 43 liegt andererseits an einer mit ihrer Anode gegen Masse geschalteten Zenerdiode 44 und an einem gegen Masse geschalteten Kondensator 45. Der gemeinsame Verbindungspunkt von Diode 43/Zenerdiode 44/Kondensator 45 bildet den Ausgang 1 der Signalaufbereitungsstufe 4.

Der Schaltverstärker 5 weist einen ersten Transistor 51 auf, dessen Basis über einen Widerstand 52 am Eingang n liegt, dessen Emitter an Masse geschaltet ist und dessen Kollektor über einen Widerstand 53 mit dem Ausgang o verbunden ist. Ein zweiter Transistor 54 liegt mit seiner Basis über einen Widerstand 55 am Eingang m, mit seinem Emitter an Masse und mit seinem Kollektor am Verbindungspunkt des Widerstandes 52 mit der Basis des Transistors 51. Der Kollektor des Transistors 54 ist ferner über einen Widerstand 56 mit dem Anschluß C verbunden.

In Fig. 3 ist eine erste Einsatzmöglichkeit des Einschaltstrombegrenzers dargestellt. Es wird ein Dimmer ohne geschaltete Netzphase eingesetzt. Dabei sind der Netzspannungsanschluß L des Einschaltstrombegrenzers 6 mit der Netzsphase L′ und der Nulleiteranschluß N mit dem Netz-Nulleiter N′ verbunden. Der Dimmer 7 liegt zwischen der Netzphase L′ und dem Lastspannungsanschluß A des Einschaltstrombegrenzers 6. Als Last liegt dem Dimmer 7 ein Transformator 8 mit sekundär angeschlossener Niedervolt-Halogenlampe 9 in Reihe. Im einzelnen ist die Primärwicklung des Transformators 8 zwischen den Netz-Nulleiter N′ und dem Lastanschluß B des Einschaltstrombegrenzers 6 geschaltet, während die Sekundärwicklung des Transformators 8 mit der Niedervolt-Halogenlampe 9 verbunden ist. Der Anschluß C des Einschaltstrombegrenzers 6 bleibt unbelegt. Wie aus der Fig. 3 ersichtlich, wird der Einschalttrombegrenzer 6 bei dieser Einsatzmöglichkeit über den Netzspannungsanschluß L ständig mit Netzspannung versorgt, auch wenn sich der die Last (= Transformator 8 mit Niedervolt-Halogenlampe 9) versorgende Dimmer 7 selbst im Ausschaltzustand befindet, d.h. die Lastspannung den Wert Null aufweist.

In Fig. 4 ist eine zweite Einsatzmöglichkeit des Einschaltstrombegrenzers dargestellt. Diese zweite Einsatzmöglichkeit wird verwendet, wenn keine permanente Spannungsversorgung des Netzspannungsanschlusses L des Einschaltstrombegrenzers 6 mit Netzspannung vorliegt, weil beispielsweise ein Dimmer 10 mit geschalteter Netzphase L′ eingesetzt wird. Dieser Dimmer 10 unterbricht die zum Netzspannungsanschluß L führende Netzphase L′ während seines Ausschaltzustandes. Während des Einschaltzustandes des Dimmers 10 wird die Netzspannung der Netzphase L′ an den Netzspannungsanschluß L gelegt, während die vom Dimmer eingestellte Lastspannung am Lastspannungsanschluß A des Einschaltstrombegrenzers 6 anliegt. Der Nulleiteranschluß N und der Anschluß C sind über eine Drahtbrücke miteinander verbunden. Transformator 8 und Niedervolt-Halogenlampe 9 sind, wie unter Fig. 3 beschrieben, an den Einschaltstrombegrenzer 6 angeschlossen.

Wie in Fig. 4 gestrichelt angedeutet ist, kann auch ein Schalter 100 anstelle eines Dimmers 10 verwendet werden. Bei Einsatz dieser Variante sind Netzspannungsanschluß L und Lastspannungsanschluß A des Einschaltstrombegrenzers miteinander zu verbinden (Netzspannung = Lastspannung).

Nachfolgend wird die Funktionsweise des Einschaltstrombegrenzers 6 beschrieben. Dabei wird zunächst von der in Fig. 3 dargestellten ersten Einsatzmöglichkeit ausgegangen, bei der auch im Ausschaltzustand des Dimmers 7 die Netzspannung am Netzspannungsanschluß L anliegt. Während des Ausschaltzustandes des Dimmers 7 stellt sich folglich am Kondensator 25 eine von der Zenerspannung der Zenerdiode 24 abhängige Spannung ein (Stromfluß über d-21-22-23), die über den Widerstand 52 des Schaltverstärkers 5 ein Einschalten des Transistors 51 gewährleistet. Hierdurch wird der Ausgang e des Netzteils 2 über den Widerstand 53 und die Kollektor-Emitter-Strecke des Transistors 51 an Masse gelegt. Die dem Eingang h der Schaltstufe 3 zugeführte Spannung reicht folglich nicht aus, um die Relaisspule 33 zu erregen, wodurch die Relaiskontakte 34 geöffnet bleiben und die Vorwiderstände 11, 12, 13 zwischen den Lastanschlüssen A und B wirksam sind.

Nach dem Einschalten des Dimmers 7 ergibt sich in einem kurzen Zeitintervall ein Laststromfluß von L′ über 7-A-a-11-12-13-14-b-B-Primärwicklung von 8 zu N′ (siehe Fig. 2 in Verbindung mit Fig. 3). Da dem Transformator 8 während des ersten Zeitintervalls nach dem Einschalten nur eine relativ geringe Versogungsspannung über die Vorwiderstande 11 bis 13 angeboten wird, stellt sich ein relativ geringer Laststrom ein. Hierdurch wird gewährleistet, daß keine Sicherungen des Dimmers oder des Transformators infolge eines zu hohen Stromflusses auslösen können.

Nach dem Einschalten des Dimmers 7 wird der Kondensator 45 der Signalaufbereitungsstufe 4 über die Widerstände 41, 42 bzw. 42a und die Diode 43 auf eine von der Zenerspannung der Zenerdiode 44 abhängige Spannung aufgeladen. Die folglich am Ausgang 1 der Signalaufbereitungsstufe 4 anstehende positive Spannung bewirkt über den Widerstand 55 ein Einschalten des Transistors 54 des Schaltverstärkers 5. Nach erfolgtem Einschalten des Transistors 54 wird die an der Basis des Transistors 51 anstehende Spannung an Masse gelegt, wodurch der Transistor 51 in den Sperrzustand übergeht. Folglich steigt die Spannung am Kondensators 29 des Netzteils auf einen von der Zenerspannung der Zenerdiode 27 abhängigen Wert an (Stromfluß über d-21-26-28-29). Die am Ausgang e des Netzteils 2 anstehende positive Spannung reicht aus, die Relaisspule 33 zu erregen (Stromfluß über e-h-31-32-33), wodurch die Relaiskontakte 34 geschlossen werden. Folglich werden die strombegrenzenden Vorwiderstände 11 bis 13 durch die Relaiskontakte überbrückt und es ergibt sich ein Laststromfluß von L′ über 7-A-a-c1-34-c2-14-b-B-Primärwicklung von 8 zu N′. Gleichzeitig leuchtet die Leuchtdiode 32 bei Erregung der Relaisspule 33 auf.

Der einstellbare Widerstand 42 oder der PTC 42a wird unter Beachtung der unmittelbar nach dem Einschalten der Lastspannung am Anschluß B zu erwartenden Spannung so eingestellt oder stellt sich selbst ein, daß die Relaisversorgungsspannung am Kondensator 29 sehr schnell freigegeben wird. Die sich aus den Bauteilen 21, 26, 28, 29 bildende Zeitverzogerung ergibt die Anzugsverzögerung ( ≈ 0,1 ... 0,2 sec.) für die Schaltstufe 3.

Die Relaiskontakte 34 bleiben geschlossen, solange eine Lastspannung am Lastspannungsanschluß A ansteht, d.h. solange sich der Dimmer 7 im Einschaltzustand befindet. Nach dem Ausschalten des Dimmers 7 entlädt sich der Kondensator 45 der Signalaufbereitungsstufe 4 über die Basis-Emitter-Strecke des Transistors 54 des Schaltverstärkers 5. Wenn die Spannung am Kondensator 45 einen Schwellwert unterschreitet, sperrt der Transistor 54. Folglich wird die Basis des Transistors 51 über den Widerstand 52 mit der positiven Spannung am Kondensator 25 des Netzteils 2 beaufschlagt. Der Transistor 51 geht in den Leitzustand über und legt den Ausgang e des Netzteils 2 über den Widerstand 53 an Masse. Folglich fällt das Relais der Schaltstufe 3 ab und die Relaiskontakte 34 werden geöffnet. Zwischen dem Lastspannungsanschluß A und dem Lastanschluß B sind wiederum die Vorwiderstände 11 bis 13 wirksam, was sich strombegrenzend beim nächsten Einschalten des Dimmers 7 auswirkt.

Bei der nachfolgenden Beschreibung der Funktionsweise des Einschaltstrombegrenzers 6 wird die in Fig. 4 dargestellte zweite Einsatzmöglichkeit behandelt, bei der ein Dimmer 10 zur Anwendung gelangt, der zusätzlich die Netzspannung selbst schaltet. Bei dieser zweiten Einsatzmöglichkeit wird der Netzspannungsanschluß L des Einschaltstrombegrenzers 6 während des Ausschaltzustandes des Dimmers 10 nicht mit Netzspannung beaufschlagt. Der Anschluß C des Einschaltstrombegrenzers 6 ist mit dem Nulleiteranschluß N zu verbinden.

Während des Ausschaltzustandes des Dimmers 10 sind die Relaiskontakte 34 der Schaltstufe 3 geöffnet, d.h. zwischen Lastspannungsanschluß A und Lastanschluß B sind die Vorwiderstände 11 bis 13 wirksam. Unmittelbar nach dem Einschalten des Dimmers 10 ergibt sich ein strombegrenzter Laststromfluß L′-10-A-a-11-12-13-14-b-B-Primärwicklung von A-N′. Während eines kurzen Zeitintervalles nach dem Einschalten des Dimmers 10 wird der Kondensator 29 des Netzteils 2 auf einen der Zenerspannung der Zenerdiode 27 entsprechenden Wert aufgeladen (Stromfluß L-d-21-26-28-29). Nach Überschreiten eines Schwellwertes der am Eingang h der Schaltstufe 3 anstehenden positiven Spannung wird die Relaisspule 33 erregt und schließt die Relaiskontakte 34, wodurch die strombegrenzenden Vorwiderstände 11 bis 13 überbrückt werden. Es ergibt sich folglich ein Laststromfluß L′-10-A-a-c1-34-c2-14-b-B-Primärwicklung von 8-N′.

Der Vorwiderstand 21 ist so bemessen, daß die strombegrenzenden Vorwiderstände 11 bis 13 während einer Verzögerungszeit 0,1...0,2 sec. eingeschaltet sind.

Die Relaiskontakte 34 bleiben während des Einschaltzustandes des Dimmers 10 permanent geschlossen. Der Transistors 51 kann durch die am Eingang n des Schaltverstärkers 5 anliegende positive Spannung nicht eingeschaltet werden, da seine Basis über dem Widerstand 56 an Masse liegt. Folglich spielt auch das Schaltverhalten des Transistors 54 bei dieser zweiten Einsatzmöglichkeit keine Rolle.

Nach dem Ausschalten des Dimmers 10 wird die Netzphase L′ vom Netzspannungsanschluß L des Einschaltstrombegrenzers 6 getrennt. Folglich wird der Kondensator 29 über den Widerstand 31, die Diode 32 und die Relaisspule 33 entladen. Unterschreitet die am Eingang h der Schaltstufe 3 anliegende Spannung einen Schwellwert, fällt das Relais ab und die Relaiskontakte 34 werden geöffnet.

Folglich sind wiederum die strombegrenzenden Vorwiderstände 11 bis 13 zwischen dem Lastspannungsanschluß A und dem Lastanschluß B des Einschaltstrombegrenzers 6 wirksam.

Wie bereits bei der Beschreibung der Schaltung gemäß Fig. 2 erwähnt, kann das Relais mit Relaisspule 33/Relaiskontakte 34 durch einen Triac 36 ersetzt werden. Der Triac 36 überbrückt dann die strombegrenzenden Vorwiderstände 11 bis 13, wenn sein Steueranschluß über den Diac 37 und den Widerstand 31 mit ausreichend hoher positiver Spannung beaufschlagt wird. Unterschreitet die am Diac 37 anstehende positive Spannung einen Schwellwert, so sperrt der Triac 36, wodurch wiederum die strombegrenzenden Vorwiderstände 11 bis 13 zwischen dem Lastspannungsanschluß A und dem Lastanschluß B wirksam sind.

## Patentansprüche

1. Einschaltstrombegrenzer für Lasten mit überhöhtem Einschaltstrom,
- mit einer den überhöhten Einschaltstrom reduzierenden, in Reihe zur Last schaltbaren, strombegrenzenden Widerstandsstufe (1), und
- mit einer die Widerstandsstufe (1) nach Ablauf einer vorgebbaren oder festen Verzögerungszeit nach dem Einschalten galvanisch leitend überbrückenden Schaltstufe (3), gekennzeichnet durch
- ein Netzteil (2), das eingangsseitig die Netzspannung empfängt, bei geschalteter Netzphase eine erste, feste Verzögerungszeit bildet, nach deren Ablauf das Netzteil (2) ausgangsseitig die Schaltstufe (3) ansteuert,
- und eine Signalaufbereitungsstufe (4), die die Lastspannung eingangsseitig empfängt, bei nicht geschalteter Netzphase eine zweite, vorgebbare Verzögerungszeit bildet, nach deren Ablauf die Signalaufbereitungsstufe (4) das Netzteil (2) über einen Schaltverstärker (5) ansteuert, woraufhin das Netzteil (2) nach Ablauf der ersten, festen Verzögerungszeit ausgangseitig die Schaltstufe (3) ansteuert.

2. Einschaltstrombegrenzer nach Anspruch 1, dadurch gekennzeichnet, daß die Signalaufbereitungsstufe (4) eine Parallelschaltung, bestehend aus einem Kondensator (45) und einer spannungsbegrenzenden Zenerdiode (44) aufweist, und diese Parallelschaltung über einen einstellbaren Vorwiderstand (42) oder sich selbst einstellenden Widerstand (42a) und eine Diode (43) mit der Lastspannung beaufschlagbar ist.

3. Einschaltstrombegrenzer nach Anspruch 1 und/oder 2, dadurch gekennzeichnet, daß das Netzteil (2) einen ersten Kondensator (29) aufweist, wobei die am ersten Kondensator (29) anstehende Spannung die Schaltstufe (3) ansteuert.

4. Einschaltstrombegrenzer nach Anspruch 3, dadurch gekennzeichnet, daß der erste Kondensator (29) über einen ersten Widerstand (21) und eine Diode (28) von der Netzspannung aufladbar ist, wobei eine erste Zenerdiode (27) zur Spannungsbegrenzung dient.

5. Einschaltstrombegrenzer nach Anspruch 3 und 4, dadurch gekennzeichnet, daß die am ersten Kondensator (29) anstehende Spannung mittels eines ersten Schalters (51) des Schaltverstärker (5) reduzierbar ist, wobei dieser erste Schalter (51) vom Netzteil (2) ansteuerbar ist.

6. Einschaltstrombegrenzer nach Anspruch 5, dadurch gekennzeichnet, daß das Netzteil (2) zur Ansteuerung des ersten Schalters (51) des Schaltverstärkers (5) einen von der Netzspannung über einen Widerstand (22) und eine Diode (23) aufladbaren zweiten Kondensator (25) mit parallelgeschalteter, spannungsbegrenzender Zenerdiode (24) aufweist.

7. Einschaltstrombegrenzer nach Anspruch 5 und 6, dadurch gekennzeichnet, daß der erste Schalter (51) des Schaltverstärkers (5) mittels eines zweiten Schalters (54) abschaltbar ist, wobei dieser zweite Schalter (54) von der Signalaufbereitungsstufe (4) ansteuerbar ist.

8. Einschaltstrombegrenzer nach einem der vorstehenden Ansprüche, dadurch gekennzeichnet, daß die Schaltstufe (3) ein vom Netzteil (2) ansteuerbares Relais (33, 34) aufweist, dessen Relaiskontakte (34) die Widerstandsstufe (1) überbrücken.

9. Einschaltstrombegrenzer nach einem der vorstehenden Ansprüche, dadurch gekennzeichnet, daß die Schaltstufe (3) einen vom Netzteil (2) ansteuerbaren elektronischen Halbleiterschalter (36) zur Überbrückung der Widerstandsstufe (1) aufweist.

10. Einschaltstrombegrenzer nach einem der vorstehenden Ansprüche, dadurch gekennzeichnet, daß die Schaltstufe (3) eine Leuchtdiode (32) aufweist, die den überbrückten Zustand der Widerstandsstufe (1) anzeigt und die vom Netzteil (2) ansteuerbar ist.

11. Einschaltstrombegrenzer nach einem der vorstehenden Ansprüche, dadurch gekennzeichnet, daß der erste Schalter (51) der Schaltstufe (3) durch externe Maßnahmen permanent abschaltbar ist, wenn die Netzspannung geschaltet zugeführt wird.

12. Einschaltstrombegrenzer nach Anspruch 2, gekennzeichnet durch den Einsatz eines temperaturabhängigen Widerstandes als sich selbst einstellender Widerstand (42a).

13. Einschaltstrombegrenzer nach Anspruch 12, gekennzeichnet durch den Einsatz eines PTC-Widerstandes als sich selbst einstellender Widerstand (42a).

## Claims

1. Starting current limiter for loads with an excessive starting current,
- having a current-limiting resistor stage (1) which reduces the excessive starting current and is switchable in series with the load, and
- having a switching stage (3) which galvanically conductively bypasses the resistor stage (1) after expiry of a predeterminable or fixed delay time after starting, characterized by
- a mains power supply unit (2), which on the input side receives the mains voltage, with the mains phase connected forms a first, fixed delay time, after the expiry of which the mains power supply unit (2) drives on the output side the switching stage (3),
- and a signal conditioning stage (4), which on the input side receives the load voltage, with the mains phase not connected forms a second, predeterminable delay time, after expiry of which the signal conditioning stage drives the mains power supply unit (2) via a switching amplifier (5), whereupon the mains power supply unit (2), after expiry of the first, fixed delay time, drives on the output side the switching stage (3).

2. Starting current limiter according to Claim 1, characterized in that the signal conditioning stage (4) exhibits a parallel circuit comprising a capacitor (45) and a voltage-limiting Zener diode (44), and this parallel circuit can be acted upon by the load voltage via a settable series resistor (42) or self-setting resistor (42a) and a diode (43).

3. Starting current limiter according to Claim 1 and/or 2, characterized in that the mains power supply unit (2) exhibits a first capacitor (29), the voltage present at the first capacitor (29) driving the switching stage (3).

4. Starting current limiter according to Claim 3, characterized in that the first capacitor (29) can be charged via a first resistor (21) and a diode (28) by the mains voltage, a first Zener diode (27) serving for voltage limitation.

5. Starting current limiter according to Claims 3 and 4, characterized in that the voltage present at the first capacitor (29) can be reduced by means of a first switch (51) of the switching amplifier (5), this first switch (51) being drivable by the mains power supply unit (2).

6. Starting current limiter according to Claim 5, characterized in that the mains power supply unit (2) exhibits for the drive of the first switch (51) of the switching amplifier (5) a second capacitor (25), chargeable by the mains voltage via a resistor (22) and a diode (23), with a parallel-connected voltage-limiting Zener diode (24).

7. Starting current limiter according to Claims 5 and 6, characterized in that the first switch (51) of the switching amplifier (5) can be disconnected by means of a second switch (54), this second switch (54) being drivable by the signal conditioning stage (4).

8. Starting current limiter according to one of the preceding claims, characterized in that the switching stage (3) exhibits a relay (33, 34), which is drivable by the mains power supply unit (2) and the relay contacts (34) of which bypass the resistor stage (1).

9. Starting current limiter according to one of the preceding claims, characterized in that the switching stage (3) exhibits an electronic semiconductor switch (36), drivable by the mains power supply unit (2), to bypass the resistor stage (1).

10. Starting current limiter according to one of the preceding claims, characterized in that the switching stage (3) exhibits a light-emitting diode (32), which indicates the bypassed condition of the resistor stage (1) and which is drivable by the mains power supply unit (2).

11. Starting current limiter according to one of the preceding claims, characterized in that the first switch (51) of the switching stage (3) is permanently disconnectable by external measures when the mains voltage, being connected, is fed in.

12. Starting current limiter according to Claim 2, characterized by the use of a temperature-dependent resistor as self-setting resistor (42a).

13. Starting current limiter according to Claim 12, characterized by the use of a PTC resistor as self-setting resistor (42a).

## Revendications

1. Limiteur de courant de branchement pour charge à courant de branchement élevé,
- comportant un étage de résistance (1) réduisant le courant de branchement élevé, pouvant être commuté en série sur la charge et limitant le courant, et
- comportant un étage de commutation (3) pontant à conduction galvanique l'étage de résistance (1) après écoulement, après le branchement, d'une durée de temporisation prédéterminable ou fixe,
caractérisé par
- une partie réseau (2) qui reçoit la tension de réseau du côté de l'entrée, qui forme lorsque la phase du réseau est branchée une première durée fixe de temporisation, la partie réseau (2) commandant après ce déroulement l'étage de commutation (3) du côté de la sortie,
- et un étage de préparation du signal (4), qui reçoit du côté de l'entrée la tension de la charge, qui forme lorsque la phase du réseau n'est pas branchée une seconde durée de temporisation prédéterminable, après l'écoulement de laquelle l'étage de préparation du signal (4) commande la partie réseau (2) par l'intermédiaire d'un amplificateur de commutation (5), suite à quoi, après écoulement de la première durée fixe de temporisation, la partie réseau (2) commande l'étage de commutation (3) du côté de la sortie.

2. Limiteur de courant de branchement selon la revendication 1, caractérisé en ce que l'étage de préparation du signal (4) présente un circuit parallèle, constitué d'un condensateur (45) et d'une diode Zener (44) limitant la tension, ce circuit parallèle pouvant être attaqué par la tension de la charge, par l'intermédiaire d'une résistance amont (42) réglable, ou d'une résistance (42a) s'établissant d'elle-même et d'une diode (43).

3. Limiteur de courant de branchement selon la revendication 1 et/ou 2, caractérisé en ce que la partie réseau (2) présente un premier condensateur (29), la tension apparaissant sur le premier condensateur (29) commandant l'étage de commutation (3).

4. Limiteur de courant de branchement selon la revendication 3, caractérisé en ce que le premier condensateur (29) peut être chargé par la tension du réseau par l'intermédiaire d'une première résistance (21) et d'une diode (28), une première diode Zener (27) servant à la limitation de la tension.

5. Limiteur de courant de branchement selon la revendication 3 et 4, caractérisé en ce que la tension apparaissant sur le premier condensateur (29) peut être réduite au moyen d'un premier commutateur (51) de l'amplificateur de commutation (5), ce premier commutateur (51) pouvant être commandé par la partie réseau (2).

6. Limiteur de courant de branchement selon la revendication 5, caractérisé en ce que, pour la commande du premier commutateur (51) de l'amplificateur de commutation (5), la partie réseau (2) présente un second condensateur (25) à diode Zener (24) limitant la tension branchée en parallèle et pouvant être chargé par la tension du réseau par l'intermédiaire d'une résistance (22) et d'une diode (23).

7. Limiteur de courant de branchement selon la revendication 5 et 6, caractérisé en ce que le premier commutateur (51) de l'amplificateur de commutation (5) peut être débranché au moyen d'un second commutateur (54), ce second commutateur (54) pouvant être commandé par l'étage de préparation du signal (4).

8. Limiteur de courant de branchement selon l'une des revendications précédentes, caractérisé en ce que l'étage de commutation (3) présente un relais (33, 34) pouvant être commandé par la partie réseau (2) et dont les contacts de relais (34) pontent l'étage de résistance (1).

9. Limiteur de courant de branchement selon l'une des revendications précédentes, caractérisé en ce que l'étage de commutation (3) présente un commutateur électronique à semi-conducteur (36) pouvant être commandé par la partie réseau (2), pour le pontage de l'étage de résistance (1).

10. Limiteur de courant de branchement selon l'une des revendications précédentes, caractérisé en ce que l'étage de commutation (3) présente une diode luminescente (32) qui indique l'état ponté de l'étage de résistance (1) et qui peut être commandée par la partie réseau (2).

11. Limiteur de courant de branchement selon l'une des revendications précédentes, caractérisé en ce que le premier commutateur (51) de l'étage de commutation (3) peut être débranché en permanence par des moyens extérieurs lorsque la tension du réseau est branchée.

12. Limiteur de courant de branchement selon la revendication 2, caractérisé par l'utilisation, comme résistance (42a) s'établissant d'elle-même, d'une résistance dépendant de la température.

13. Limiteur de courant de branchement selon la revendication 12, caractérisé par l'utilisation, comme résistance (42a) s'établissant d'elle-même, d'une résistance CTP.
